# EUROPEAN PATENT SPECIFICATION

(11) **EP 1 695 838 B1**
(45) Date of publication and mention of the grant of the patent: **05.10.2011**
(21) Application number: 04807318.3
(22) Date of filing: 13.12.2004
(51) Int. Cl.: B41M 1/18, B41M 3/14, C09D 11/00

(54) **IMAGE, RECORDING METHOD, INFORMATION RECOGNITION METHOD, AND INFORMATION RECOGNITION SYSTEM**
BILDAUFZEICHNUNGSVERFAHREN, INFORMATIONSERKENNUNGSVERFAHREN UND INFORMATIONSERKENNUNGSSYSTEM
IMAGE, PROCEDE D'ENREGISTREMENT, PROCEDE DE RECONNAISSANCE D'INFORMATION ET SYSTEME DE RECONNAISSANCE D'INFORMATION

(30) Priority: 11.12.2003 JP 2003413563
(43) Date of publication of application: 30.08.2006
(73) Proprietor: CANON KABUSHIKI KAISHA, Ohta-ku Tokyo 146-8501 (JP)
(72) Inventor: NAGASHIMA, Akira, c/o CANON KABUSHIKI KAISHA, Ohta-ku, Tokyo 1468501 (JP); SUGAMA, Sadayuki, c/o CANON KABUSHIKI KAISHA, Ohta-ku, Tokyo 1468501 (JP); IKEDA, Masami, deceased (JP)
(74) Representative: TBK
(86) International application number: PCT/JP2004/018961
(87) International publication number: WO 2005/056302

(56) References cited:
- JP-A- 6 227 190
- JP-A- 6 234 289
- JP-A- 11 291 607
- JP-A- 2001 162 955
- JP-A- 2002 144 777

## Description

### Technical Field

The present invention relates to an image, a recording method, an information recognition method, and an information recognition system. More specifically, the present invention relates to an image, a recording method, an information recognition method, and an information recognition system that enable easy an authenticity judgment of a genuine product with respect to a product produced by forgery, alteration, or a fradulent method.

### Background Art

Various propositions have been made in recent years in order to prevent imitation, copying, and the like of various prints and printed paper typified by stocks and cards. For example, Patent Documents 1 to 4 each propose a print using ink containing a colorless pigment which cannot be observed under ordinary light and is excited with ultraviolet light to emit visible light. Patent Document 5 proposes a composition which is excited with infrared light to emit infrared light. Patent Documents 6 and 7 each propose a print and an image display body each using a fluorescent agent that emits visible light with infrared rays. In each of those propositions, information is formed by sequentially laminating colorant layers for respective colors on recording paper or a recording medium. When one tries to record a large amount of information according to such a mode, the number of laminated colorant layers increases, so the print or the recording medium has an increased thickness. In addition, in the recording medium or the print in which information is composed of a laminate of colorant layers, the respective colorants constituting the information are independent of each other. Therefore, the colorants in the colorant layers can be identified by one who intends to perform forgery or alteration.

Furthermore, an image according to the preamble of claim 1 is known from Patent document 8.
- Patent Document 1: Japanese Patent Application Laid-Open No. H10-297075
- Patent Document 2: Japanese Patent Application Laid-Open No.H07-125403
- Patent Document 3: Japanese Utility Model Examined Publication No. H07-83987
- Patent Document 4: Japanese Utility Model Application Laid-open No. Sho 60-187085
- Patent Document 5:Japanese Patent Application Laid-Open No. H08-151545
- Patent Document 6:Japanese Patent Application Laid-Open No. H10-129107
- Patent Document 7:Japanese Patent Application Laid-Open No. H09-240136
- Patent document 8: JP-A-2002 144 777
- Patent document 9: JP-A-11 291 607
- Patent document 10: JP-A-06 227 190

### Disclosure of Invention

A clear interface generally exists between laminated layers in a laminated configuration of the prior art. Various light beams are refracted at the time of incidence/reflection of light at the interface. It may be difficult to read out a large amount of information accurately if the refraction is not taken into consideration. In addition, the laminated ink layers may be peeled off due to the interface. On the other hand, in the case where an ink layer capable of emitting fluorescence in a visible light region (hereinafter, referred to as "fluorescent ink layer") is used, fluorescent emission cannot be observed if a black ink layer that absorbs all the wavelengths in the visible light region made of carbon black or the like is placed as an upper layer. Therefore, in this case, a fluorescent ink layer is placed on the black ink layer to clarify its presence, or an image on the black ink layer is disturbed. In another method, in order to avoid such a laminated configuration, regional separation of the respective ink layers on the surface of the recording medium and the stencil printing of them must be performed.

An object of the present invention is to provide an image, a recording method, an information recognition method, and an information recognition system capable of providing a print or the like which can easily record a large amount of information without laminating a large number of ink layers, and which hardly allows forgery, alteration, or the like.

The above object is solved by an image according to claim 1, a recording method according to claim 11, an information recognition method according to claim 16 and an information recording system according to claim 17.

With the image according to claim 1, the presence of a fluorescent emission portion is hardly observed, and density fluctuation in the colored ink layer is prevented, so no conventional inconvenience on an image occurs.

The dotted exposure of the image according to claim 1 can be formed more effectively by using any one of those characteristics of claims 1 or 2 or by combining them.

Examples of a component that makes those effects of the present invention more remarkable include the following configurations: (1) the first ink layer uses a wavelength outside the visible light wavelength region as excitation energy to emit fluorescence of a specific color in the visible light wavelength region, (2) the wavelength region of an emission spectrum of the first ink layer is in the wavelength region of an absorption spectrum of the second ink layer, (3) the first ink layer contains multiple lanthanoids, and uses infrared wavelength light as excitation energy to emit fluorescence in the visible light wavelength region, (4) the second ink layer is a layer of a black-based color containing carbon black, (5) the image has the first ink layer on which the second ink layer is not laminated in a portion adjacent to the laminated portion, (6) the image has a part of the second ink layer that does not have the first ink layer in a portion adjacent to the laminated portion, and forms information resulting from the second ink layer, (7) the recording material has a transparent layer at least on the second ink layer in the laminated portion and on the dotted exposure portion of the first ink layer, and (8) a thickness of the transparent layer is larger than the total thickness of the ink layers formed on the recording material.

In addition, the recording material may have a transparent layer at least on the second ink layer in the laminated portion and on the dotted exposure portion of the first ink layer. The transparent layer has an effect of providing refraction such that emission of the dotted exposure portion that causes dotted light emission can be observed as surface emission or an effect of smoothing the surface of the image.

According to the claimed methods, the image of the present invention can be certainly obtained. Preferable examples of specific conditions for those methods include: (1) each of the first ink and the second ink is an ink for gravure printing containing an aqueous or oil-based liquid and a film forming material; (2) each of the first ink and the second ink is an ink for offset printing, letterpress printing, or screen printing containing a solvent and an oxidation-polymerizable film forming material; and (3) each of the first ink and the second ink is ink for ultraviolet-curing printing containing a solvent and an oxidation-polymerizable film forming material.

### Brief Description of Drawings

FIG. 1 is a drawing of an image according to the present invention as viewed from the surface of the image;
FIG. 2 is a cross-sectional drawing of the image of FIG. 1;
FIG. 3 is a drawing showing a state where a colorant used for a first ink layer is fixed onto a recording material; and
FIG. 4 is a drawing showing a state where a transparent coating layer is placed on an outermost surface.

### Best Mode for Carrying Out the Invention

Next, the present invention will be described in more detail by way of preferred embodiments.

An image of the present invention is an image formed by overlapping multiple ink layers, characterized in that: a first ink layer is formed on a recording material by means of a first ink having fluorescent emission property; a second ink layer is formed on the first ink layer by means of a second ink; the first ink layer is exposed in a dotted manner on the second ink layer; and the image is formed by at least one of the first ink layer and the second ink layer. With this characteristic, the optical density of the second ink layer is comparable to that of an image composed of the second ink layer alone, and is sufficient for an image, and the first ink layer cannot be observed. In addition, emission can be observed in the form of a dotted emitting portion when the image is optically magnified at a magnification of 5 to 10, so the emission can be observed in the form of a line-shaped or plane-shaped emitting portion (the following examples without explanations satisfy this condition and provide this effect).

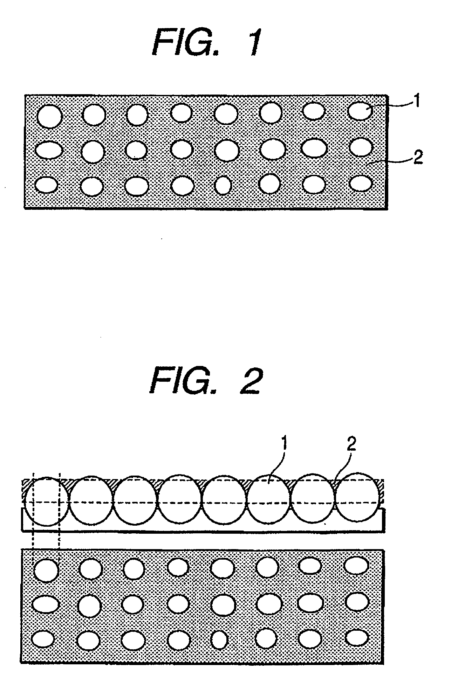

FIG. 1 shows an image of the present invention when viewed from a printed surface. In the figure, a portion 1 corresponds to a part of an ink layer formed by means of a first ink. A portion 2 corresponds to an ink layer portion formed by means of a second ink. The part 1 of the first ink layer is exposed in a dotted manner on the second ink layer 2. The dotted exposure defines a relative positional relationship between a fluorescent ink layer or a fluorescent particle in it and an ink layer to be laminated or a colored colorant in it. Even if the ink layer is laminated, fluorescent emission can be observed in the form of a dotted emitting portion through judgment according to magnification by means of a lens or the like. At the same time, the fluorescent emission can be observed in the form of a line-shaped or plane-shaped emitting portion.

In addition, FIG. 2 is a cross-sectional drawing of the image of FIG. 1. In the figure, the portion 1 corresponds to the first ink layer portion. The portion 2 corresponds to the second ink layer portion. In addition, broken lines indicate the thickness of the second ink layer (thickness of a printed coating). Since the thickness of the second ink layer is smaller than that of the first ink layer, the second ink layer is fixed to each gap between bumps of the first ink layer. Therefore, the optical density of the second ink layer (for example, 1.40) is nearly equal to that of the second ink layer alone (for example, 1.43).

In the above description, when the first ink layer is formed by means of an ink that uses infrared wavelength light as excitation energy to emit fluorescence, the image can find use in an increased number of security applications. In addition, when the first ink layer is formed by means of an ink that uses infrared wavelength light as excitation energy to emit fluorescence in the visible light wavelength region, the image can be recognized with ease. In addition, when the wavelength region of an emission spectrum of the first ink layer is in the wavelength region of an absorption spectrum of the second ink layer, it becomes possible to exploit the characteristics of the image of the present invention. That is, the image, which is hardly recognized with the eyes in ordinary cases owing to a large printed area of the second ink layer, can be observed with a microscope or through irradiation with infrared wavelength light when the first ink layer is formed by means of the above ink. When a colorant of the first ink forming the first ink layer is a pigment, the first ink can be easily exposed in a dotted manner in the second ink layer. The colorant of the first ink is particularly preferably an inorganic pigment.

The colorant of the first ink is also particularly preferably a colorant containing multiple lanthanoids. When a colorant of the second ink forming the second ink layer is a nonfluorescent colorant, fluorescent property of the first ink layer can be easily observed. The colorant of the second ink is preferably a pigment, particularly preferably an inorganic pigment. In addition, when the colorant of the second ink layer is carbon black, the first ink layer can be easily recognized because the second ink layer absorbs most of the visible light.

The recording method of the present invention is a recording method for forming an image by overlapping multiple ink layers, the method including: forming a first ink layer of a first ink having fluorescent emission property on a recording material; and forming a second ink layer of a second ink on the first ink layer so as to have a space.

The recording method of the present invention is a recording method for forming an image by overlapping multiple ink layers, the method including: forming a first ink layer of a first ink having fluorescent emission property on a recording material; and forming a second ink layer of a second ink on the first ink layer, in which the average particle size of a dispersing element dispersed into the first ink is larger than the average particle size of a dispersing element dispersed into the second ink. The difference in average particle size is preferably such that fluorescent particles have an average particle size of 0.5 µm or more to about 3 µm (preferably 1 µm or more to 2 µm or less, and it is more preferable that particles having an average particle size in this range account for 40% or more of the first ink), while a colored colorant has an average particle size on the order of 10⁻⁹ m (nm). Specifically, the fluorescent particles are preferably inorganic pigment particles, and the colored colorant is preferably an organic dye or an organic pigment.

The recording method of the present invention is a recording method for forming an image by overlapping multiple ink layers, the method including: forming a first ink layer of a first ink having fluorescent emission property on a recording material; and forming a second ink layer of a second ink on the first ink layer, in which the thickness of the first ink layer formed on the recording material (thickness of a printed coating) is larger than the thickness of the second ink layer. The ink used for the image formation contains a colorant such as a pigment, and a dispersant for maintaining a state of dispersion of, the colorant in a liquid, or a film forming material or binder for fixing the colorant to printing paper (hereinafter, the term "printing paper" also refers to a recording medium) after ink is applied to record information. Examples of the recording medium include: ordinary commercially available recording media such as pulp, fibers, resins, stickers, and corrugated cardboard; and those obtained by subjecting the above recording media to a coating process for coloring.

The image of the present invention is formed according to any one of various printing modes. For example, as conventionally known, a liquid medium for ink when the image is formed according to an inkjet mode is mainly water or a mixture of water and a water-soluble organic solvent. Examples of a water-soluble liquid medium include: water-soluble alcohols; and water-soluble polyhydric alcohols such as ethylene glycol, propylene glycol, diethylene glycol, triethylene glycol, and glycerin. In addition, in order to maintain the dispersability of a pigment in an aqueous medium, the liquid medium contains any one of pigment dispersants such as various surfactants and water-soluble resins. Representative examples of the water-soluble resins include acrylic resins having a water-soluble group such as a carboxyl group or a quaternary ammonium group.

In addition, when the image of the present invention is formed by means of an ink for gravure printing, for example, an aqueous ink for gravure printing, an emulsion composed of water containing a water-soluble organic solvent such as an alcohol, and a water-soluble resin or a water-insoluble resin, or the like is used for the ink. Examples of the resins include acrylic resins, vinyl chloride-vinyl acetate copolymer resins, ethylene-vinyl acetate copolymer resins, polyester resins, polyamide resins, cellulose-based resins, polyurethane resins, and chlorinated polypropylene resins. The ink further contains a cross-linking agent or the like as required. Examples of an organic solvent when the image is formed by means of an oil-based ink for gravure printing include methyl ethyl ketone, toluene, xylene, cyclohexanone, cyclohexane, and alkylsubstituted cyclohexane. Examples of a film forming material (binder) for the ink include the above water-insoluble resins. The oil-based ink similarly contains a cross-linking agent as required.

In addition, when the image of the present invention is formed through offset printing, letterpress printing, or screen printing, a liquid medium for ink used for each printing contains a petroleum-based solvent and a film forming material having an oxidation-polymerizable double bond such as semi-drying oil, drying oil, a rosin-denatured phenol resin, a petroleum resin, or an alkyd resin. Any one of the above liquid media (varnish and vehicle) for ink is conventionally known, and any one of the other conventionally known liquid media can be used for an ink for forming the image of the present invention. Although liquid media for ink used for representative printing modes have been exemplified above, liquid media for ink used for the other printing modes are also applicable.

The main characteristic of the present invention is that a fluorescent colorant is used for the first ink as a colorant of ink for any one of the above conventionally known printing modes. The term "fluorescent colorant" refers to a colorant that uses light having a certain wavelength as excitation energy to emit light in a different wavelength region that does not include the wavelength for the excitation. Of such colorants, a pigment having high fastness property is preferable. A dye may be used in combination depending on applications and purposes.

The fluorescent colorant to be used in the present invention, which has fluorescent emission property and is used for ink, generates a spectrum when it is excited with ultraviolet light and then returns to a lower energy level. In addition, a peak of the spectrum is in a wavelength region of blue, green, red, or the like. The colorant is obtained by adding a trace amount of metal (such as copper, silver, manganese, bismuth, or lead) as an activator for intensifying emission to a high-purity fluorescent material such as zinc sulfide or a sulfide of an alkaline earth metal; and sintering the mixture at a high temperature. The hue, brightness, and degree of color attenuation of an ultraviolet fluorescent pigment can be adjusted in accordance with a combination of a host crystal and an activator.

Specific examples of the fluorescent colorant include Ca₂B₅O₉Cl:Eu²⁺, CaWO₄, ZnO:Zn, Zn₂SiO₄:Mn, Y₂O₂S:Eu, ZnS:Ag, YVO₄:Eu, Y₂O₃:Eu, Gd₂O₂S:Tb, La₂O₂S:Tb, Y₃Al₅O₁₂:Ce, Sr₅(PO₄)₃Cl:Eu, 3(Ba, Mg)O·8Al₂O₃:Eu, Zn₂GeO₄:Mn, Y(P, V)O₄:Eu, 0.5MgF₂·3.5MgO·GeO₂: Mn, ZnS:Cu, and ZnS:Mn. Each of them is used alone, or several kinds of them are arbitrarily selected and mixed before use. Fluorescent spectra of those fluorescent colorants have peaks outside the wavelength region of blue, green, red, or the like, and can be appropriately selected in accordance with a desired fluorescent spectrum.

An infrared fluorescent pigment to be used in the present invention is a pigment which is excited with infrared light (about 800 to about 1,200 nm) to emit visible light (about 400 to about 800 nm). The infrared fluorescent pigment is a fluorescent material having an extremely special excitation mechanism. Specifically, multiple photons of infrared light having small energy are used to excite visible light emission. The excitation mechanism is classified into two types. One of them, which is observed in many host crystals using Er³⁺, Ho³⁺, (rare earth) and the like as activators, is such that excitation is performed through multi-stage excitation in activator ions. The other type is such that Er³⁺, Tm³⁺, Ho³⁺, or the like as an emission center is excited to a higher level through multiple times of transfer of resonance energy from a sensitizer, that is, multi-stage energy transfer resulting from the absorption of infrared rays by a sensitizer Yb³⁺. Specific examples of the sensitizer include YF₃:Yb+Er, YF₃:Yb+Tm, and BaFCl:Yb+Er.

The nonfluorescent colorant to be used in the present invention is preferably a pigment. Examples of an ordinary pigment include: inorganic pigments such as titanium oxide, zinc white, ultramarine blue, iron blue, chromium oxide, and iron oxide; insoluble azo pigments such as arylides, acetoacetic acid arylide disazo pigments, and pyrazolone azo pigments; soluble azo pigments such as lake red C and brilliant carmine 6B; organic pigments such as copper phthalocyanines, quinacridones, indigo·thioindigo pigments, indanthrones, and perynone·perylenen pigments; and various pigments used for conventional printing ink such as carbon black.

In each combination of pigments, the ordinary pigment to be used is preferably a pigment having a slight or no absorption in the infrared portion and the ultraviolet portion. For example, when a black pigment that absorbs light over an entire wavelength region is used, it is preferably used at a low concentration (less than 1 mass%). In addition, either of the above pigments is preferably used in combination with a pigment that reflects light over an entire wavelength region such as a white pigment. The use of the white pigment efficiently improves the emission of the ultraviolet fluorescent pigment and/or the infrared fluorescent pigment without allowing ultraviolet light and/or infrared light with which the printed layer is irradiated to pass through the printing paper. In addition, a colored ordinary pigment to be used is preferably a pigment having a hue different from the emission wavelength of the ultraviolet fluorescent pigment and/or the infrared fluorescent pigment. In such a combination, irradiation of a print with ultraviolet light and/or infrared light provides an observer with a significantly different visual appreciation. As a result, a large amount of information can be recorded, the forgery, alteration, and falsification of information become difficult, and a false product can be easily detected.

The ink to be used in the present invention can be obtained by mixing required components and dispersing a pigment into a liquid medium according to a production method adapted to its printing mode. The ultraviolet fluorescent pigment and the infrared fluorescent pigment easily sediment in ink because of its large specific gravity. Therefore, they are preferably subjected to a re-dispersion treatment before use. Although a printing method by means of the ink to be used in the present invention is not particularly limited, specifically, the ink is suitable for inkjet recording, gravure printing, offset printing, letterpress printing, screen printing, or the like.

Examples of the printing paper (recording medium) include: securities, bills, gift certificates, cards, train tickets, admission tickets, and the like; synthetic paper; and plastic films. The examples further include a commodity itself which is easily imitated, and a case or corrugated cardboard box for the commodity, so the printing paper is not particularly limited. Printing on the printing paper (recording medium) may be such that various images (information) are recorded by means of the above ink alone, or may be such that a specific image is formed on part of an ordinary print according to the method of the present invention. For example, securities may be formed by means of ordinary printing ink, and only part of its image may be formed according to the method of the present invention. A fluorescent pigment is relatively expensive. A problem associated with cost can be avoided by printing a part of an image, for example, part of a large number of letters to be printed with the method of the present invention.

Next, an example of the recording method of the present invention will be described with reference to the drawings.

FIG. 1 shows an image of the present invention when viewed from its surface. In the figure, a portion 1 corresponds to a portion in which a first ink layer is formed. A portion 2 corresponds to a portion to which a second ink layer is formed. Part of the first ink layer is exposed in a dotted manner on the surface of the second ink layer.

FIG. 2 is a cross-sectional drawing of the image of FIG. 1. In the figure, a region 1 corresponds to the portion to which the first ink layer is formed. A region 2 corresponds to the portion to which the second ink layer is formed. In addition, broken lines indicate the thickness of the second ink layer (thickness of a printed coating). Since the thickness of the second ink layer is smaller than that of the first ink layer, the second ink layer is fixed to each gap between bumps of the first ink layer.

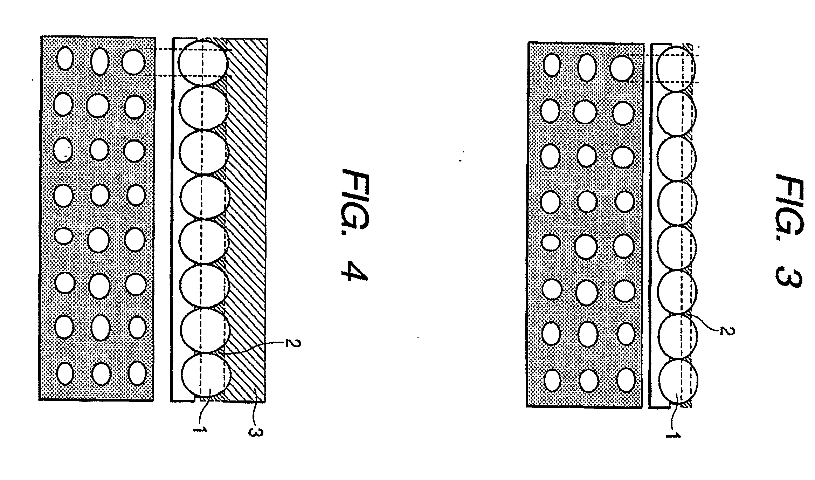

FIG. 3 shows a state where a colorant used for the first ink layer is fixed onto a recording material. In the figure, a portion 1 corresponds to the first ink layer portion. A portion 2 corresponds to the second ink layer portion. In addition, broken lines indicate the thickness of the second ink layer. The second ink layer is fixed to each gap between bumps of the first ink layer.

FIG. 4 shows a state where a transparent coating layer 3 is placed on an outermost surface. When the transparent coating layer is placed on the outermost surface, the irregularities on the image surface are suppressed, whereby the print quality of the image becomes satisfactory. In this case, when a film-shaped layer is used as the transparent coating layer, a large number of fine air bubbles that cannot be normally observed can be generated between the image surface and the film. As a result, it becomes difficult to judge the state of a printed portion from the image surface, which is preferable for an image for which security is demanded.

In addition, the use of the above recording method results in the formation of a good image, wherein a second ink layer is formed by means of a second ink on a first ink layer formed by means of a first ink having fluorescent emission property on a recording material with the second ink layer being exposed in a dotted manner on the first ink layer.

The present invention also provides an information recognition method characterized by including irradiating the image described above with ultraviolet light and/or infrared light to recognize information, and an information recognition system characterized by including the above-described image, a light source for irradiating the image with ultraviolet light and/or infrared light, and means for recognizing a hue generated by the irradiation using the light source. The present invention provides an image formed by overlapping multiple ink layers, comprising a first ink layer formed on a recording material by means of a first ink having fluorescent emission property and a second ink layer formed on the first ink layer by means of a second ink wherein the first ink layer is exposed in a dotted manner on the second ink layer, and the image is formed by at least one of the first ink layer and the second ink layer. In addition, the present invention provides an image formed by overlapping multiple ink layers, comprising a first ink layer formed on a recording material by means of a first ink having fluorescent emission property and a second ink layer formed on the first ink layer by means of a second ink, wherein the first ink layer is exposed in a dotted manner on the second ink layer, the image being formed by at least one of the first ink layer and the second ink layer, and the thickness of the first image on the recording material is larger than the thickness of the second image.

In addition, the present invention provides an image formed by overlapping multiple ink layers, comprising a first ink layer formed on a recording material by means of a first ink having fluorescent emission property and a second ink layer formed on the first ink layer by means of a second ink, wherein the first ink layer is exposed in a dotted manner on the second ink layer, the image is formed by at least one of the first ink layer and the second ink layer, and a transparent layer is formed on an outermost surface of the image formed by overlapping the multiple ink layers on the recording material.

In addition, the present invention provides a recording method for forming an image by overlapping multiple ink layers, the method including the steps of forming a first ink layer of a first ink having fluorescent emission property on a recording material and forming a second ink layer of second ink on the first ink layer, wherein the image is formed by at least one of the first ink layer and the second ink layer, and the second ink layer is so formed as to have a space. In addition, the present invention provides a recording method for forming an image by overlapping multiple ink layers, comprising the steps of forming a first ink layer of a first ink having fluorescent emission property on a recording material and forming a second ink layer of a second ink on the first ink layer, wherein the image is formed by at least one of the first ink layer and the second ink layer, and the average particle size of dispersing elements dispersed in the first ink is larger than the average particle size of dispersing elements dispersed in the second ink.

In addition, the present invention provides a recording method for forming an image by overlapping multiple ink layers, the method comprising the steps of forming a first ink layer of a first ink having fluorescent emission property on a recording material and forming a second ink layer of a second ink on the first ink layer, wherein the image is formed by at least one of the first ink layer and the second ink layer, and the applied thickness of the first ink on the recording material is larger than the applied thickness of the second ink. In addition, the present invention provides an information recognition method, including irradiating an image formed by overlapping multiple ink layers with ultraviolet light and/or infrared light to recognize image information, the image having a first ink layer formed by means of a first ink having fluorescent emission property on a recording material and a second ink layer formed by means of a second ink on the first ink layer, wherein the first ink layer is exposed in a dotted manner on the second ink layer, and the image is formed by at least one of the first ink layer and the second ink layer. In addition, the present invention provides an information recognition system comprising an image formed by overlapping multiple ink layers, the image having a first ink layer formed by means of a first ink having fluorescent emission property on a recording material and a second ink layer formed by means of a second ink on the first ink layer, the first ink layer being exposed in a dotted manner on the second ink layer, the image being formed by at least one of the first ink layer and the second ink layer; a light source for irradiating the image with ultraviolet light and/or infrared light; and means for recognizing a hue generated by the irradiation using the light source.

### Examples

Next, the present invention will be described in more detail by way of examples. Unless otherwise stated, the terms "part" and "%" in the following description mean "part by mass" and "mass%", respectively.

### (Example 1)

A styrene-acrylic acid copolymer (having a weight average molecular weight of about 7,000 and an acid value of about 200), a predetermined amount of potassium hydroxide necessary for neutralizing the copolymer, and water were stirred and mixed while the temperature of the mixture was kept at about 60°C, to thereby prepare a 10% aqueous solution of the styrene-acrylic acid copolymer. The aqueous solution of the styrene-acrylic acid copolymer thus prepared was used as a dispersant to prepare a pigment dispersion element having the following composition.

| | |
|---|---|
| 10% aqueous solution of styrene-acrylic acid copolymer | 20 parts |
| Infrared fluorescent pigment (YF₃:Yb:Er) | 3 parts |
| C.I. Pigment Yellow 138 | 7 parts |
| Glycerin | 20 parts |
| Diethylene glycol | 20 parts |
| Triethylene glycol | 10 parts |
| Water | 20 parts |

Those materials were fed into a batch-type vertical sand mill. Glass beads having a diameter of 1 mm were loaded as media into the mill, and the whole was subjected to a dispersion treatment for 3 hours while being cooled with water. The resultant pigment dispersion was subjected to a first centrifugal separation treatment (10,000 rpm, 30 minutes) to remove coarse particles, and then the resultant was diluted with water by a factor of 2 to prepare an ink. Furthermore, the ink was subjected to a second centrifugal separation treatment (10,000 rpm, 30 minutes) to remove coarse particles, and then the resultant was diluted with a liquid medium to provide a predetermined composition. Thus, an ink for inkjet recording to be used in the present invention was prepared. On the other hand, an ink for inkjet recording was prepared in the same manner as that described above except that only a yellow pigment (7 parts) was used and no infrared fluorescent pigment was used in the above ink composition.

A solid image was printed on plain paper by using the ink containing no infrared fluorescent pigment and a BJF600 printer (manufactured by Canon Inc.). Then, the letters "AB" (preferably the trademark or logomark of a manufacturer for an authenticity judgment) were printed on the solid image by using the ink containing the infrared fluorescent pigment. Although the printed product presented a uniform yellow color under daylight, the letters "AB" were clearly observed when the printed product was irradiated with infrared ray of 800 to 1,200 nm in a dark room. The letters "AB" were also clearly observed when the printed product was irradiated with infrared rays in the same manner as that described above under daylight.

### (Example 2)

The following components were fed into a batch-type vertical sand mill. Glass beads having a diameter of 1 mm were loaded as media into the mill, and the whole was,subjected to a dispersion treatment for 3 hours while being cooled with water. Thus, ink for gravure printing to be used in the present invention was prepared. The ink was nearly free of staining, and presented a white color.

| | |
|---|---|
| White pigment (titanium oxide) | 2 parts |
| Infrared fluorescent pigment (YF₃:Yb:Er) | 9 parts |
| Ultraviolet fluorescent pigment (ZnS:Cu) | 9 parts |
| Methyl ethyl ketone | 50 parts |
| Toluene | 50 parts |
| Acrylic resin | 30 parts |

The letters "genuine product" were printed on part of woodfree paper by using the ink. Then, a scenic image was printed on the letters by using ordinary inks for four-color gravure printing. Although only the scenic image was observed under daylight, the letters "genuine product" were clearly observed when the scenic image was irradiated with infrared ray of 800 to 1,200 nm in a dark room. In addition, the letters "genuine product" appeared in the scenic image when the scenic image was irradiated with infrared rays in the same manner as that described above under daylight.

### (Example 3)

The following components were fed into a batch-type vertical sand mill. Glass beads having a diameter of 1 mm were loaded as media into the mill, and the whole was subjected to a dispersion treatment for 3 hours while being cooled with water. Thus, Ink 1 for gravure printing to be used in the present invention was prepared. The ink presented a red color.

| Composition of Ink 1 | |
|---|---|
| Infrared fluorescent pigment (YF₃:Yb:Er) | 10 parts |
| C.I. Pigment Red 122 | 10 parts |
| Methyl ethyl ketone | 50 parts |
| Toluene | 50 parts |
| Acrylic resin | 30 parts |

Separately, Ink 2 and Ink 3 for gravure printing having the following compositions were prepared in the same manner as that described above.

| Composition of Ink 2 | |
|---|---|
| C.I. Pigment Red 122 | 10 parts |
| Methyl ethyl ketone | 50 parts |
| Toluene | 50 parts |
| Acrylic resin | 30 parts |

| Composition of Ink 3 | |
|---|---|
| Infrared fluorescent pigment (YF₃:Yb:Er) | 10 parts |
| Methyl ethyl ketone | 50 parts |
| Toluene | 50 parts |
| Acrylic resin | 30 parts |

A solid image 1 was formed on a polyester film by using Ink 1 described above. Then, solid images 2 and 3 were formed on the polyester film by overprinting Ink 2 and Ink 3 described above in the order of Ink 2 → Ink 3 and Ink 3 → Ink 2 in such a manner that the pigment concentrations would be the same. The images 1 to 3 were observed under daylight or while being irradiated with infrared ray of 800 to 1,200 nm under daylight. As a result, the image 1 was most clearly observed in any case.

### (Example 4)

The following components were fed into a batch-type vertical sand mill. Glass beads having a diameter of 1 mm were loaded as media into the mill, and the whole was subjected to a dispersion treatment for 3 hours while being cooled with water. Thus, Ink 1 for gravure printing to be used in the present invention was prepared. The ink presented a red color.

| Composition of Ink 1 | |
|---|---|
| Ultraviolet fluorescent pigment (Flurol BK) | 10 parts |
| C.I. Pigment Red 122 | 10 parts |
| Methyl ethyl ketone | 50 parts |
| Toluene | 50 parts |
| Acrylic resin | 30 parts |

Separately, Ink 2 and Ink 3 for gravure printing having the following compositions were prepared in the same manner as that described above.

| Composition of Ink 2 | |
|---|---|
| C.I. Pigment Red 122 | 10 parts |
| Methyl ethyl ketone | 50 parts |
| Toluene | 50 parts |
| Acrylic resin | 30 parts |

| Composition of Ink 3 | |
|---|---|
| Ultraviolet fluorescent pigment (Flurol BK) | 10 parts |
| Methyl ethyl ketone | 50 parts |
| Toluene | 50 parts |
| Acrylic resin | 30 parts |

A solid image 1 was formed on a polypropylene film by using Ink 1 described above. Then, solid images 2 and 3 were formed on the polypropylene film by overprinting Ink 2 and Ink 3 described above in the order of Ink 2 → Ink 3 and Ink 3 → Ink 2 in such a manner that the pigment concentrations would be the same. The images 1 to 3 were observed under daylight or while being irradiated with black light rays under daylight. As a result, the image 1 was most clearly observed in any case.

### (Example 5)

The following resin and oil were dissolved into the following solvent at 220°C under nitrogen, and the resultant solution was stirred under heating for 1 hour to prepare varnish.

| | |
|---|---|
| Rosin-denatured phenol resin | 40 parts |
| Soybean oil | 25 parts |
| Petroleum-based solvent (AF Solvent 4) | 35 parts |

The following pigment mixture was added to the varnish prepared as described above in such a manner that the pigment concentration would be 20%. Then, the mixture was evenly kneaded by using a sand mill to prepare an ink for offset printing to be used in the present invention.

| | |
|---|---|
| C.I. Pigment Red 122 | 10 parts |
| Infrared fluorescent pigment (YF₃:Yb:Er) | 10 parts |

On the other hand, an ink for offset printing was prepared in the same manner as that described above except that only the red pigment (10 parts) was used and no infrared fluorescent pigment was used in the above ink composition.

Ciphered letters were printed on plain paper by an offset printing machine by using the above ink containing the infrared fluorescent pigment. Subsequently, a solid image for covering the entire ciphered letters was printed by using the above ink containing no infrared fluorescent pigment. Although the entire surface of the printed product presented a uniform red color under daylight, only the ciphered letters were clearly observed when the printed product was irradiated with infrared ray of 800 to 1,200 nm in a dark room. The ciphered letters were also clearly observed when the printed product was irradiated with infrared rays in the same manner as that described above under daylight. The ink for offset printing can also be used for letterpress printing or screen printing.

In addition, information recorded on the printed product obtained by using the ink of Example 5 was read by using a scanner having a device for applying specific infrared light adapted to the infrared fluorescent pigment and a device for reading emission information (cipher). As a result, the information was satisfactorily read. Furthermore, information recorded on a printed product formed on the surface of a recording medium by using the ink of Example 5 while varying the thickness of an infrared light absorption portion was read by using a scanner having a device for applying specific infrared light with an excitation wavelength adapted to the infrared fluorescent pigment and a device for reading emission information. As a result, information corresponding to the change in thickness of the infrared light absorption portion was read.

### (Example 6)

The following components were sufficiently mixed and dispersed by using a three-roll machine to prepare an ultraviolet-curing ink.

| Composition of Ink 1 | |
|---|---|
| Infrared fluorescent pigment (YF₃:Yb:Er/average particle size: 2 µm) | 50 parts |
| Polyester acrylate | 30 parts |
| Hydroxyethyl methacrylate | 13 parts |
| Hydroxymethyl propiophenone | 7 parts |

| Composition of Ink 2 | |
|---|---|
| Carbon black (average particle size: 500 nm) | 20 parts |
| Polyester acrylate | 45 parts |
| Hydroxyethyl methacrylate | 25 parts |
| Hydroxymethyl propiophenone | 10 parts |

Letters were printed on Yupo paper by using Ink 1 described above, and were irradiated with UV light to form an image 1. Furthermore, a solid image was sequentially formed by using Ink 2 in such a manner that the solid image would overlap with a part of the image 1 and a printed thickness of Ink 2 would be smaller than that of Ink 1. After that, the resultant was irradiated with UV light to form an image 2, thereby obtaining a final image 3. When the final image 3 was observed under daylight, only the black solid image 2 was observed. When the image 3 was irradiated with infrared light of 800 to 1,000 nm in a dark room, the image 1 including the portion overlapping with the image 2 was observed.

A transparent laminated film having a thickness larger than the total applied thickness of Ink 1 and Ink 2 was laminated on the image 3 obtained as described above. After that, the resultant was irradiated with infrared light of 800 to 1,000 nm in a dark room. As a result, the image 1 including the portion overlapping with the image 2 was clearly observed. In particular, there was no difference between the portion of the image 2 overlapping with the image 1 and the portion of the image 2 not overlapping with the image 1 as compared to the case before the lamination of the transparent laminated film.

### (Example 7)

The portion where the image 1 and the image 2 overlapped with each other in the final image 3 of Example 6 was observed with a microscope at a magnification of "x 10". As a result, Ink 2 used for forming the image 2 was observed being dotted on the portion where the image 1 was printed. Furthermore, the portion was irradiated with infrared light of 800 to 1,000 nm in a dark room. As a result, the image 1 formed by means of Ink 1 was observed being dotted in the image 2 formed by means of Ink 2.

As described above, according to the present invention, there can be provide an image, a recording method, a recognition method, and an information recognition system with which a large amount of information can be easily recorded without the lamination of a large number of colorant layers, and which hardly allow forgery, alteration, or the like.

As described above, according to the present invention, a relative positional relationship between a large number of fluorescent ink layers or a fluorescent particle in it and an ink layer to be laminated or a colored colorant in it can be clarified. As a result, even if the ink layer is laminated, fluorescent emission can be observed in the form of a dotted emitting portion through judgment according to magnification by means of a lens or the like, or in the form of a line-shaped or plane-shaped emitting portion with the eyes. Therefore, there can be provide an image, a recording method, a recognition method, and an information recognition system with which a large amount of information can be easily recorded, and which hardly allow forgery, alteration, or the like.

## Claims

1. An image, comprising a laminated portion in which a plurality of ink layers are laminated on a recording material, wherein the laminated portion has a colored second ink layer (2) laminated on a first ink layer having fluorescent emission property, wherein the first ink layer (1) contains a fluorescent pigment as colorant, and part of the first ink layer (1) is exposed in a dotted manner with respect to the second ink layer (2), **characterized in that**
a thickness of the first ink layer (1) is larger than a thickness of the second ink layer (2), and the second ink layer (2) is fixed to each gap between bumps of the first ink layer (1).

2. An image according to claim 1, wherein the fluorescent emission property is obtained by the fluorescent pigment in first ink for forming the first ink layer (1), and an average particle size of the fluorescent pigment is larger than an average particle size of a colorant in a second ink for forming the second ink layer (2).

3. An image according to claim 1 or 2, wherein the first ink layer (1) uses a wavelength outside a visible light wavelength region as excitation energy to emit fluorescence of a specific color in the visible light wavelength region.

4. An image according to claim 2 or 3, wherein a wavelength region of an emission spectrum of the first ink layer (1) is in a wavelength region of an absorption spectrum of the second ink layer (2).

5. An image according to claim 3, wherein the first ink layer (1) contains multiple lanthanoids, and uses infrared wavelength light as excitation energy to emit fluorescence in the visible light wavelength region.

6. An image according to claim 5, wherein the second ink layer (2) comprises a layer of a black-based color containing carbon black.

7. An image according to claim 1, wherein the image has the first ink layer (1) on which the second ink layer (2) is not laminated in a portion adjacent to the laminated portion.

8. An image according to claim 1 or 7, wherein the image has a part of the second ink layer (2) that does not have the first ink layer (1) in a portion adjacent to the laminated portion, and forms information resulting from the second ink layer (2).

9. An image according to claim 1 or 2, wherein the recording material has a transparent layer (3) at least on the second ink layer (2) in the laminated portion and on a dotted exposure portion of the first ink layer (1).

10. An image according to claim 9, wherein a thickness of the transparent layer (3) is larger than a total thickness of the ink layers (1, 2) formed on the recording material.

11. A recording method, comprising the steps of:
forming a first ink layer (1) of a first ink having a fluorescent pigment on a recording material; and
forming a second ink layer (2) of a second ink having a colorant in such a manner that a part of the first ink layer (1) is exposed in a dotted manner with respect to the second ink layer (2),
**characterized in that** an applied thickness of the first ink on the recording material is larger than an applied thickness of the second ink by such an extent that the part of the first ink layer (1) is exposed in a dotted manner with respect to the second ink layer (2) and such that the second ink layer (2) is fixed to each gap between bumps of the first ink layer (1).

12. A recording method according to claim 11,
wherein an average particle size of the dispersing element dispersed into the first ink (1) is larger than an average particle size of a dispersing element dispersed in the second ink (2) by such an extent that a part of the first ink layer (1) is exposed in a dotted manner with respect to the second ink layer (2).

13. A recording method according to claims 11 to 12, wherein each of the first ink and the second ink comprises an ink for gravure printing containing an aqueous liquid or an oil-based liquid and a film forming material.

14. A recording method according to any one of claims 11 to 13, wherein each of the first ink and the second ink comprises an ink for offset printing, letterpress printing, or screen printing containing a solvent and an oxidation-polymerizable film forming material.

15. A recording method according to any one of claims 11 to 13, wherein each of the first ink and the second ink comprises an ink for ultraviolet-curing printing containing a solvent and an oxidation-polymerizable film forming material.

16. An information recognition method, comprising irradiating an image according to any one of claims 1 to 10 with a wavelength outside the visible light wavelength region, to observe fluorescent emission of the first ink layer (1) due to a dotted exposure of the first ink layer (1).

17. An information recognition system for performing an authenticity judgment of a first product that has an image according to any one of claims 1 to 10 with respect to a second product that does not have the image, by irradiating the image with a wavelength outside the visible light wavelength region to judge that the first product is a true product based on a presence of fluorescent emission of the first ink layer (1).

18. An image according to claim 1, wherein the fluorescent pigment contained in the first ink layer (1) emits fluorescence in a visible light wavelength range by using infrared wavelength light as excitation energy.

19. An image according to claim 18, wherein the second ink layer (2) comprises a layer of a black-based color containing carbon black, and a wavelength region of an emission spectrum of the first ink layer (1) is in a wavelength region of an absorption spectrum of the second ink layer (2).

## Patentansprüche

1. Bild mit einem laminierten Abschnitt, in welchem eine Vielzahl von Tintenschichten auf ein Aufzeichnungsmaterial laminiert sind, wobei der laminierte Abschnitt eine farbige zweite Tintenschicht (2) hat, die auf eine erste Tintenschicht mit einer Fluoreszenz emittierenden Eigenschaft laminiert ist, wobei die erste Tintenschicht (1) ein fluoreszierendes Pigment als Farbstoff enthält, und ein Teil der ersten Tintenschicht (1) in einer gepunkteten Art mit Bezug auf die zweite Tintenschicht (2) freigelegt ist, **dadurch gekennzeichnet, dass**
eine Dicke der ersten Tintenschicht (1) größer als eine Dicke der zweiten Tintenschicht (2) ist, und die zweite Tintenschicht (2) an jedem Spalt zwischen Buckeln der ersten Tintenschicht (1) fixiert ist.

2. Bild gemäß Anspruch 1, wobei die Fluoreszenzemissionseigenschaft durch das fluoreszierende Pigment in der ersten Tinte zum Ausbilden der ersten Tintenschicht (1) erhalten wird, und eine durchschnittliche Partikelgröße des fluoreszierenden Pigments größer als eine durchschnittliche Partikelgröße eines Farbstoffs in einer zweiten Tinte zum Ausbilden der zweiten Tintenschicht (2) ist.

3. Bild gemäß Anspruch 1 oder 2, wobei die erste Tintenschicht (1) eine Wellenlänge außerhalb eines Wellenlängenbereichs eines sichtbaren Lichts als eine Erregungsenergie zum Emittieren von Fluoreszenz einer bestimmten Farbe in dem Wellenbereich sichtbaren Lichts verwendet.

4. Bild gemäß Anspruch 2 oder 3, wobei ein Wellenlängenbereich eines Emissionsspektrums der ersten Tintenschicht (1) in einem Wellenlängenbereich eines Absorptionsspektrums der zweiten Tintenschicht (2) liegt.

5. Bild gemäß Anspruch 3, wobei die erste Tintenschicht (1) eine Vielzahl von Lanthanoiden enthält und Licht mit Infrarotwellenlänge als Erregungsenergie zum Emittieren von Fluoreszenz in dem Wellenlängenbereich sichtbaren Lichts verwendet.

6. Bild gemäß Anspruch 5, wobei die zweite Tintenschicht (2) eine Schicht einer schwarzbasierten Farbe aufweist, die Kohlenschwarz enthält.

7. Bild gemäß Anspruch 1, wobei das Bild die erste Tintenschicht (1) hat, an der die zweite Tintenschicht (2) in einem Abschnitt nicht laminiert ist, der zu dem laminierten Abschnitt benachbart ist.

8. Bild gemäß einem der Ansprüche 1 bis 7, wobei das Bild einen Teil der zweiten Tintenschicht (2) hat, der in einem dem laminierten Abschnitt benachbarten Abschnitt die erste Tintenschicht (1) nicht hat, und der aus der zweiten Tintenschicht (2) resultierende Information bildet.

9. Bild gemäß Anspruch 1 oder 2, wobei das Aufzeichnungsmaterial eine transparente Schicht (3) zumindest auf der zweiten Tintenschicht (2) in dem laminierten Abschnitt und auf einem gepunkteten, freigelegten Abschnitt der ersten Tintenschicht (1) hat.

10. Bild gemäß Anspruch 9, wobei eine Dicke der transparenten Schicht (3) größer als eine Gesamtdicke der Tintenschichten (1, 2) ist, die an dem Aufzeichnungsmaterial ausgebildet sind.

11. Aufzeichnungsverfahren mit folgenden Schritten:
Ausbilden einer ersten Tintenschicht (1) aus einer ersten Tinte mit einem fluoreszierenden Pigment an einem Aufzeichnungsmaterial; und
Ausbilden einer zweiten Tintenschicht (2) aus einer zweiten Tinte mit einem Farbstoff in einer solchen Art, dass ein Teil der ersten Tintenschicht (1) in einer gepunkteten Art mit Bezug auf die zweite Tintenschicht (2) freiliegt, **dadurch gekennzeichnet, dass**
eine aufgebrachte Dicke der ersten Tinte an dem Aufzeichnungsmaterial um ein solches Ausmaß größer als eine aufgebrachte Dicke der zweiten Tinte ist, dass der Teil der ersten Tintenschicht (1) in einer gepunkteten Art mit Bezug auf die zweite Tintenschicht (2) freiliegt, und so dass die zweite Tintenschicht (2) an jedem Spalt zwischen Buckeln der ersten Tintenschicht (1) fixiert ist.

12. Aufzeichnungsverfahren gemäß Anspruch 11, wobei eine durchschnittliche Partikelgröße des Dispersionselements, welches in der ersten Tinte (1) dispergiert ist, größer als eine durchschnittliche Partikelgröße eines Dispersionselements ist, welches in der zweiten Tinte (2) dispergiert ist, und zwar zu einem solchen Ausmaß, dass ein Teil der ersten Tintenschicht (1) in einer gepunkteten Art mit Bezug auf die zweite Tintenschicht (2) freiliegt.

13. Aufzeichnungsverfahren gemäß einem der Ansprüche 11 bis 12, wobei sowohl die erste Tinte als auch die zweite Tinte eine Tinte für Tiefdruck aufweist, die eine wässrige Flüssigkeit oder eine ölbasierte Flüssigkeit und ein filmbildendes Material enthält.

14. Aufzeichnungsverfahren gemäß einem der Ansprüche 11 bis 13, wobei sowohl die erste Tinte als auch die zweite Tinte eine Tinte für Offsetdruck, Buchdruck oder Siebdruck aufweist, die ein Lösungsmittel und ein Oxidation-/Polymerisationfähiges, filmbildendes Material enthält.

15. Aufzeichnungsverfahren gemäß einem der Ansprüche 11 bis 13, wobei sowohl die erste Tinte als auch die zweite Tinte eine Tinte für Ultraviolettaushärtungsdruck aufweist, die ein Lösungsmittel und ein Oxidation-/Polymerisationsfähiges, filmbildendes Material aufweist.

16. Informationserkennungsverfahren, das das Bestrahlen eines Bildes gemäß einem der Ansprüche 1 bis 12 mit einer Wellenlänge außerhalb eines Wellenlängenbereichs für sichtbares Licht aufweist, um eine fluoreszierende Emission der ersten Tintenschicht (1) infolge des gepunkteten Freiliegens der ersten Tintenschicht (1) zu beobachten.

17. Informationserkennungssystem zum Durchführen einer Echtheitsbeurteilung eines ersten Erzeugnisses, welches ein Bild gemäß einem der Ansprüche 1 bis 10 aufweist, mit Bezug auf ein zweites Erzeugnis, welches das Bild nicht aufweist, durch Bestrahlen des Bildes mit einer Wellenlänge außerhalb des Wellenlängenbereichs für sichtbares Licht, um auf Grundlage des Vorhandenseins der fluoreszierenden Emission der ersten Tintenschicht (1) zu beurteilen, dass das erste Erzeugnis ein echtes Erzeugnis ist.

18. Bild gemäß Anspruch 1, wobei das in der ersten Tintenschicht (1) enthaltende fluoreszierende Pigment eine Fluoreszenz in einem Wellenlängenbereich sichtbaren Lichts emittiert, indem Infrarotwellenlängenlicht als Erregungsenergie verwendet wird.

19. Bild gemäß Anspruch 18, wobei die zweite Tintenschicht (2) eine Schicht einer schwarzbasierten Farbe aufweist, die Kohlenschwarz enthält, und ein Wellenbereich eines Emissionsspektrums der ersten Tintenschicht (1) in einem Wellenlängenbereich eines Absorptionsspektrums der zweiten Tintenschicht (2) liegt.

## Revendications

1. Image, comprenant une partie en strates dans laquelle une pluralité de couches d'encre sont appliquées par superposition sur un matériau d'enregistrement, où la partie en strates comprend une deuxième couche d'encre colorée (2) appliquée par superposition sur une première couche d'encre ayant une propriété d'émission fluorescente, où la première couche d'encre (1) contient un pigment fluorescent faisant office de colorant, et une partie de la première couche d'encre (1) est exposée en pointillés par rapport à la deuxième couche d'encre (2), **caractérisée en ce que**
une épaisseur de la première couche d'encre (1) est plus importante qu'une épaisseur de la deuxième couche d'encre (2), et la deuxième couche d'encre (2) est fixée à chaque espace entre des bosses de la première couche d'encre (1).

2. Image selon la revendication 1, dans laquelle la propriété d'émission fluorescente est obtenue par le pigment fluorescent dans la première encre pour former la première couche d'encre (1), et la taille moyenne des particules du pigment fluorescent est plus importante qu'une taille moyenne des particules d'un colorant dans une deuxième encre pour former la deuxième couche d'encre (2).

3. Image selon la revendication 1 ou 2, dans laquelle la première couche d'encre (1) utilise une longueur d'onde se trouvant en dehors d'une région de longueurs d'onde de la lumière visible comme énergie d'excitation pour émettre une fluorescence d'une couleur spécifique dans la région de longueurs d'onde de la lumière visible.

4. Image selon la revendication 2 ou 3, dans laquelle une région de longueurs d'onde d'un spectre d'émission de la première couche d'encre (1) se trouve dans une région de longueurs d'onde d'un spectre d'absorption de la deuxième couche d'encre (2).

5. Image selon la revendication 3, dans laquelle la première couche d'encre (1) contient plusieurs lanthanides, et utilise une lumière à longueur d'onde infrarouge comme énergie d'excitation pour émettre une fluorescence dans la région de longueurs d'onde de la lumière visible.

6. Image selon la revendication 5, dans laquelle la deuxième couche d'encre (2) comprend une couche d'une couleur à base de noir contenant du noir de charbon.

7. Image selon la revendication 1, dans laquelle l'image contient la première couche d'encre (1) sur laquelle la deuxième couche d'encre (2) n'est pas appliquée par superposition dans une partie adjacente à la partie en strates.

8. Image selon la revendication 1 ou 7, dans laquelle l'image contient une partie de la deuxième couche d'encre (2) qui ne contient pas la première couche d'encre (1) dans une partie adjacente à la partie en strates, et forme des informations résultant de la deuxième couche d'encre (2).

9. Image selon la revendication 1 ou 2, dans laquelle le matériau d'enregistrement possède une couche transparente (3) au moins sur la deuxième couche d'encre (2) dans la partie en strates et sur une partie d'exposition en pointillés de la première couche d'encre (1).

10. Image selon la revendication 9, dans laquelle une épaisseur de la couche transparente (3) est plus importante qu'une épaisseur totale des couches d'encre (1, 2) formées sur le matériau d'enregistrement.

11. Procédé d'enregistrement, comprenant les étapes qui consistent :
à former une première couche d'encre (1) d'une première encre ayant un pigment fluorescent sur un matériau d'enregistrement ; et
à former une deuxième couche d'encre (2) d'une deuxième encre ayant un colorant de façon à ce qu'une partie de la première couche d'encre (1) soit exposée en pointillés par rapport à la deuxième couche d'encre (2),
**caractérisé en ce qu'**une épaisseur appliquée de la première encre sur le matériau d'enregistrement est plus importante qu'une épaisseur appliquée de la deuxième encre au point que la partie de la première couche d'encre (1) est exposée en pointillés par rapport à la deuxième couche d'encre (2) et que la deuxième couche d'encre (2) est fixée à chaque espace entre des bosses de la première couche d'encre (1).

12. Procédé d'enregistrement selon la revendication 11,
dans lequel une taille moyenne des particules de l'élément de dispersion dispersé dans la première encre (1) est plus importante qu'une taille moyenne des particules d'un élément de dispersion dispersé dans la deuxième encre (2) au point qu'une partie de la première couche d'encre (1) est exposée en pointillés par rapport à la deuxième couche d'encre (2).

13. Procédé d'enregistrement selon les revendications 11 à 12, dans lequel chacune de la première encre et de la deuxième encre comprend une encre d'héliogravure contenant un liquide aqueux ou un liquide à base d'huile et un matériau formant une pellicule.

14. Procédé d'enregistrement selon l'une quelconque des revendications 11 à 13, dans lequel chacune de la première encre et de la deuxième encre comprend une encre d'impression offset, de typographie, ou de sérigraphie contenant un solvant et un matériau formant une pellicule qui peut polymériser par oxydation.

15. Procédé d'enregistrement selon l'une quelconque des revendications 11 à 13, dans lequel chacune de la première encre et de la deuxième encre comprend une encre d'impression à séchage aux UV contenant un solvant et un matériau formant une pellicule qui peut polymériser par oxydation.

16. Procédé de reconnaissance d'information, comprenant l'irradiation d'une image selon l'une quelconque des revendications 1 à 10 par une longueur d'onde se trouvant en dehors de la région de longueurs d'onde de la lumière visible, en vue d'observer une émission fluorescente de la première couche d'encre (1) du fait d'une exposition en pointillés de la première couche d'encre (1).

17. Système de reconnaissance d'information destiné à estimer l'authenticité d'un premier produit qui a une image selon l'une quelconque des revendications 1 à 10 par rapport à un deuxième produit qui ne comprend pas l'image, en irradiant l'image par une longueur d'onde se trouvant en dehors de la région de longueurs d'onde de la lumière visible pour estimer que le premier produit est un vrai produit en fonction de la présence d'une émission fluorescente de la première couche d'encre (1).

18. Image selon la revendication 1, dans laquelle le pigment fluorescent contenu dans la première couche d'encre (1) émet une fluorescence dans une plage de longueurs d'ondes de la lumière visible en utilisant une lumière à longueur d'onde infrarouge comme énergie d'excitation.

19. Image selon la revendication 18, dans laquelle la deuxième couche d'encre (2) comprend une couche d'une couleur à base de noir contenant du noir de charbon, et une région de longueurs d'onde d'un spectre d'émission de la première couche d'encre (1) se situe dans une région de longueurs d'onde d'un spectre d'absorption de la deuxième couche d'encre (2).
